# EUROPÄISCHE PATENTSCHRIFT

(11) **EP 0 601 301 B1**
(45) Veröffentlichungstag und Bekanntmachung des Hinweises auf die Patenterteilung: **15.07.1998**
(21) Anmeldenummer: 93116139.2
(22) Anmeldetag: 06.10.1993
(51) Int. Cl.: B01D 63/10, B01D 61/08

(54) **Membranelemente für die reverse Osmose**
Membrane elements for reverse osmosis
Eléments à membrane pour osmose reverse

(30) Priorität: 09.10.1992 DE 4233952
(43) Veröffentlichungstag der Anmeldung: 15.06.1994
(73) Patentinhaber: Knappe, Holger, D-23845 Grabau (DE)
(72) Erfinder: Knappe, Holger, D-23845 Grabau (DE)
(74) Vertreter: Siewers, Gescha, Dr.

(56) Entgegenhaltungen:
- EP-A- 0 313 665
- DE-A- 3 342 386
- DE-A- 3 737 931
- DE-A- 4 120 858
- DE-C- 3 814 699
- Rautenbach, R., Albrecht, R., Membrantrennverfahren, S. 115, Salle und Sauerländer, DE, 1981

## Beschreibung

Die Erfindung betrifft Membranelement für die Umkehrosmose.

Als Umkehrosmose bezeichnet man die Tatsache, daß aus einer konzentrierten wässrigen oder nicht wässrigen Lösung von in der Regel Elektrolyten das Lösungsmittel aus der konzentrierteren in die verdünnte Lösung wandert, wenn die erstere unter einen Druck gesetzt wird, der höher ist als ihr osmotischer Druck. In großem Maßstab wird die Umkehrosmose eingesetzt bei der Trinkwassergewinnung durch Meerwasserentsalzung und bei der Aufbereitung von Brackwasser. Je nach vorgesehenem Einsatzgebiet werden die notwendigen Membranen als Flach-, Rohr- oder Schlauchmembran eingesetzt, die in der Regel zu sogenannten Moduln zusammengefaßt werden. Die Membranen selbst bestehen vorzugsweise aus Polyamiden, Polysulfonen oder Celluloseacetaten.

Bei den nach heutigem Stand der Technik üblichen Spiralmembranen wird die Membranfolie um das Permeatrohr gewickelt und dann durch eine nachfolgende Radialwicklung mit Glasfasern, die mit Reaktivharz beschichtet wird, fixiert. Dieses Membranelement wird dann in ein druckfestes Gehäuse oder Rohr eingesetzt, das so ausgelegt sein muß, daß es die bei der Umkehrosmose, im folgenden UO genannt, üblichen Betriebsdrücke von etwa 16 bis 100 bar aushalten kann. Die Länge der Druckrohre für die Rohrmembranen variiert je nach Einsatzgebiet und beträgt bei Meerwasserentsalzungsanlagen beispielsweise in der Regel 1 bis 6 Meter, die Länge der Rohrmembranen beträgt etwa 1 m, der Durchmesser etwa 20 cm.

Die Herstellung der Rohrmembranen erfolgt heute praktisch überall in der Weise, daß die aufgewickelte Membranfolie mit einer Glasfaserradialwicklung versehen wird, die dann entweder mit einem Raaktivharz beschichtet wird, oder daß die Glasfaser gleich bei der Wicklung durch ein Bad aus Reaktivharz gezogen wird, so daß der Auftrag von Faser und Reaktivharz gleichzeitig erfolgt.

Als Reaktiv- oder Reaktionsharze bezeichnet man durch Polykondensation hergestellte polyfunktionelle, d.h. ungesättigte Produkte, die mit ungesättigten Monomeren zu duroplastischen Enderzeugnissen verarbeitet werden können. Zu den Reaktionsharzen zählen insbesondere die ungesättigten Polyesterharze, abgekürzt als UP bezeichnet, die Polydiallylphthalatharze, als PDAP bezeichnet, und bestimmte Siliconharzformmassen. Reaktivharze sind aber auch Polyaddukte, zu denen die Epoxidharze und die Polyisocyanat- bzw. Polyurethanharze zählen.

UP-Harze bestehen aus hochmolekularen Estern aus Dicarbonsäuren wie z.B. Maleinsäure und mehrwertigen Alkohlen wie beispielsweise Propylenglykol oder Butandiol. Die aus den Säuren und Diolen gebildeten Kettenmoleküle enthalten je Säurerest eine Doppelbindung, die die Möglichkeit zur späteren Vernetzung bildet. Die verhältnismäßig hochmolekularen linearen Moleküle werden in der Regel in Monomeren wie beispielsweise Styrol gelöst. Die Mischungen polymerisieren erst dann, wenn ein Katalysator, und zwar in der Regel ein Peroxid, zugegeben wird; das Harz geht dann vom ungesättigten in den gesättigten, räumlich vernetzten Zustand über. Die Vernetzungspolymerisation erfordert in der Regel Temperaturen zwischen etwa 80 bis 100 °C, die durch Zugabe eines Aktivators sowie Kobald- oder Mangansalzen oder tertiären Aminen gesenkt werden können. Die Härtungszeit hängt zum Teil von der Menge der Beschleuniger, insbesondere aber auch von der Schichtdicke ab und kann Minuten bis zu einigen Stunden betragen.

Bisher erfolgt die Herstellung von Rohrmembranen nach dem klassischen Verfahren, in dem die aufgetragene Reaktivharzschicht, die in der Regel aus Epoxidharzen besteht, thermisch vernetzt wird. Um ein Abfließen der aufgetragenen Harzschicht zu verhindern, müssen die rohrförmigen Membranen während des Aushärtens, das einige Stunden in Anspruch nimmt, regelmäßig in Rotation gehalten werden, was spezielle Vorrichtungen erfordert. Hinzu kommt, daß die Öfen für das Aushärten bei Rohrmembranen in Länge von einem oder mehreren Metern beträchtliche Dimensionen aufweisen müssen, wobei auch zu berücksichtigen ist, daß diese Verfahren naturgemäß durch die erforderliche Beheizung sehr energie- und und daher kostenintensiv sind. Die thermische Härtung erfolgt in der Regel bei 130 °C während 24 Stunden.

Es sind auch Verfahren zur Kalthärtung von Reaktionsharzen bekannt, insbesondere bei Polyestern, aber diese Verfahren weisen den Nachteil auf, daß bei der Kalthärtung beim Erstarren des Harzes die Polymerisation noch unvollständig ist, so daß Formteile in Heißlufträumen im Anschluß an die Härtung noch Stunden nachgehärtet werden müssen. Für die Nachhärtung werden in der Regel höhere Temperaturen empfohlen, da sie sonst bei Raumtemperatur 2 bis 3 Wochen betragen kann.

Ein weiteres Verfahren zur Polymerisation von Reaktionsharzen ist die an und für sich bekannte Photopolymerisation, bei der durch Licht radikalisch oder ionisch ablaufende Mechanismen initiiert werden. Bei der radikalisch initiierten Polymerisation werden geeigneten Monomeren, wie ungesättigten Estern, Photoinitiatoren zugesetzt, die in der Regel Peroxide darstellen. Zur Erhöhung der Empfindlichkeit werden zusätzlich Photosensibilatoren wie Acetophenon, Benzophenon oder Farbstoffe zugegeben. Der Nachteil der Photopolymerisation liegt allerdings darin, daß die Schichtdicke nur gering sein darf, da sonst keine ausreichende Durchhärtung erzielt wird, so daß dieses Verfahren technisch in der Regel nur zur Härtung von Lacken oder zur Herstellung von Photoresists für die Elektronik benutzt wird.

Bei den bisher üblichen Rohrmembranen, bei denen die Ummantelung des Membranpakets direkt mit Glasfaser und Reaktionsharz erfolgt, besteht ein weiterer Nachteil darin, daß die als Lösungsmittel für die Reaktionsharze verwendeten Monomere in dem Fall, daß sie bei der Polymerisation nicht völlig eingebunden werden, mit dem entsalzten Wasser in Berührung kommen können; das gleiche gilt für Reste von Initiatoren, wobei insbesondere Amininitiatoren Bedenken bestehen, da Amine unter Umständen zur Bildung von Nitroso-Verbindungen führen können, die fast durchweg als kanzerogen gelten.

Ein Membranelement gemäß dem Oberbegriff von Anspruch 1 ist aus Rautenbach, R., Albrecht, R., Membrantrenn verfahren, S.115, Salle und Sauerländer, DE, 1981 bekannt.

Es besteht daher noch ein Bedarf nach Membranelementen, die einfach und deutlich kostengünstiger als bisher herzustellen sind, und die ein gesundheitlich unbedenkliches Permeat liefern.

Zur Lösung der Aufgabe wird ein Membranelement für die UO vorgeschlagen, bestehend aus Permeatrohr mit umwickelter Membran, Radialwicklung mit Glasfasern und äußerer Ummantelung aus Reaktionsharzen, die dadurch gekennzeichnet ist, daß die Reaktionsharze durch Photopolymerisation vernetzt sind, und die Ummantelung druckbeständig ist.

Völlig überraschend hat sich herausgestellt, daß sich Rohrmembranen mit dem an sich bekannten Aufbau auch dadurch herstellen lassen, daß die Vernetzung der Reaktivharze, insbesondere von UP-Harzen, die auf die Glasfaser aufgetragen werden, durch Photopolymerisation erfolgt, da es im Gegensatz zu den bisherigen Annahmen durchaus möglich ist, die Schichtstärke der Harzschicht in einem Bereich zu halten, der der Photopolymerisation zugänglich ist.

Der Einsatz der Photopolymerisation zum Aushärten bietet beträchtliche Vorteile gegenüber den bisher üblichen Verfahren, da die Herstellung der Rohrmembranen in einem Bruchteil der bisher benötigten Zeit erfolgen kann, wobei, da keine Heizung erforderlich, beträchtliche Mengen an Energie eingespart werden können. Außerdem hat das Verfahren den Vorzug, daß die Vernetzung nach dem Auftragen praktisch schlagartig erfolgt, so daß die Gefahr einer Penetration von Monomeren aus dem Lösungsmittel in die Membranfolien praktisch ausgeschlossen werden kann, wobei noch als weiterer Vorteil hinzukommt, daß die Photopolymerisation ohne Amininitiatioren durchgeführt werden kann, so daß entsprechende lebensmittelrechtliche Bedenken wegen des Vorhandenseins von Aminen ausgeschlossen werden können.

Die Herstellung der erfindungsgemäßen Rohrmembranen erfolgt in der Weise, daß das mit der Membran umwickelte Permeatrohr eine Radialwicklung mit Glasfaser erhält, deren Stärke relativ gering bemessen sein kann, da die Druckbelastung in den Austauschsystemen einer Entsalzungsanlage durch das die Rohrmembran umschließende Gehäuse aufgefangen wird. Nach der Radialwicklung wird diese mit einer Schicht aus Reaktionsharzen, insbesondere UP-Harzen versehen, die so ausgelegt wird, daß sie einer endgültigen Schichtdicke nach der Polymerisation etwa 0,5 bis 1,5 mm entspricht. Die so vorbereiteten Rohrmembranen werden sofort anschließend an die Beschichtung kontinuiertlich unter leichtem Drehen einer UV-Lichtanlage mit einer Leistung von etwa 120 bis 200 Watt/cm² zugeführt. Die UP-Harze enthalten als Initiatioren ausschließlich nicht stickstoffhaltige Verbindungen, und zwar insbesondere Peroxide wie Benzoylperoxid, substituierte Ketone oder Phosphinoxide. Zur Härtung wird vorzugsweise Licht mit einer Wellenlänge im Bereich zwischen 250 bis 400 nm, und zwar insbesondere im Bereich von 320 bis 350 nm eingesetzt.

Die Aushärtung erfolgt je nach der Schichtstärke innerhalb von etwa 30 bis 120 Sekunden.

Obgleich bei diesem Verfahren auf den Zusatz von Amininitiatioren verzichtet werden kann, hat es sich als besonders vorteilhaft herausgestellt, wenn bei den erfindungsgemäßen Rohrmembranen die um das Permeatrohr gewickelte Membran mit einer schlauchförmigen Folie aus lebensmittelrechtlich unbedenklichen Thermoplasten versehen wird, bevor die Radialwicklung mit Glasfasern und Auftrag des Reaktionsharzes erfolgen.

Als lebensmittelrechtlich unbedenkliche Thermoplasten können vorzugsweise PE oder PP oder deren Copolymere eingesetzt werden. Auf diese Art und Weise ist es möglich, jeden Einfluß von Monomeren aus verwendeten Lösungsmitteln oder eine Migration von Resten des Initiators auszuschließen.

Die erfindungsgemäßen Membranelemente können in sehr viel kürzerer Zeit und sehr viel kostengünstiger hergestellt werden als nach den bisher üblichen Produktionsverfahren, und sie zeichnen sich durch eine hervorragende Qualität des Permeates aus.

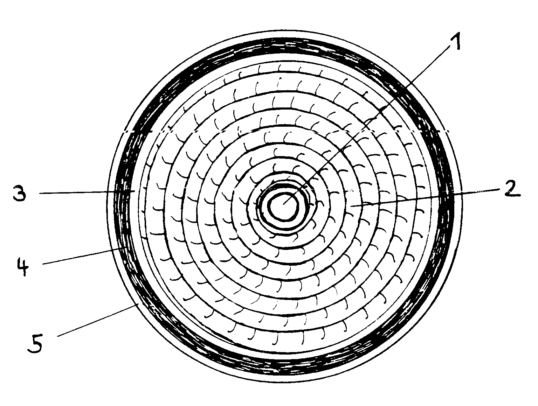

Im folgenden wird die Erfindung anhand der Zeichnung näher erläutert:

In der Zeichnung ist ein Querschnitt durch eine erfindungsgemäße Rohrmembran dargestellt. Das Permeatrohr 1 ist in vielfachen Lagen spiralförmig umwickelt von der Membranfolie 2 die durch eine Schlauchfolie 3 aus lebensmittelrechtlich unbedenklichen Thermoplasten umschlossen wird. An diese Schlauchfolie schließt sich die Radialwicklung mit Glasfasern 4 an, die eingebettet ist in die äußere Ummantelung aus Reaktionsharzen 5.

Zur weiteren Erläuterung dieser Erfindung wird ein Ausführungsbeispiel beschrieben.

Die Rohrmembranen in Form von Spiralfilterelementen weisen typischerweise eine Länge von etwa 1 m (40 inch) und einen Durchmesser von etwa 20 cm (8 inch) auf. Diesen Filterkörpern wird eine Schrumpffolie aus PE mit einem Durchmesser von ca. 202 mm übergezogen, wobei die Folie genau zwischen die Antiteleskopingringe paßt und den Membranteil vollständig abdeckt. Das Membranelement wird jetzt in die Faserlegeranlage eingespannt und mit einem Warmluftstrahler beheizt, bis die PE-Folie aufgeschrumpft ist. Dies dauert in der Regel etwa 70 Sekunden.

Anschließend wird ein E-Glasrovingstrang mit einer Breite von ca. 3 cm radial auf das Membranelement flächendeckend gewickelt. Der Roving verläuft dabei durch ein Bad mit Polyesterharz und wird in dieser getränkten Form gewickelt. Die so entstehende Laminatfläche hat eine Dicke von etwa 0,8 mm , wobei der Glasanteil ca. 75 bis 80 % beträgt.

Das Polyesterharz ist mit einem oder vorzugsweise einer Mischung von aminfreien Photoinitiatioren versehen. Nach einer Bewicklungszeit von ca. 20 Sekunden wird der Strang abgetrennt und gleichzeitig das Licht der über der Wickelmaschine angeordneten UV-Strahler freigegeben. Die Wellenlänge des verwendeten UV-Lichtes beträgt ungefähr 350 nm. Die Leistung der UV-Lichtanlage beträgt 200 W/cm². Nach etwa 60 bis 90 Sekunden ist das Laminat vollständig durchgehärtet, so daß das gebrauchsfertige Membranelement von der Maschine genommen werden kann.

## Patentansprüche

1. Membranelement für die Umkehrosmose in einem umschließenden, druckbeständigen Gehäuse, bestehend aus Permeatrohr (1) mit umwickelter Membran (2), Radialwicklung mit Glasfasern (4) und Ummantelung (5) aus Reaktionsharzen, dadurch gekennzeichnet, daß die Reaktionsharze der Ummantelung durch Photopolymerisation vernetzt sind.

2. Membranelement nach Anspruch 1, dadurch gekennzeichnet, daß als Reaktionsharze ungesättigte Polyester vorliegen.

3. Membranelement nach Anspruch 1 oder 2, dadurch gekennzeichnet, daß zwischen Membran (2) und Radialwicklung (4) eine Schlauchfolie (3) aus lebensmittelrechtlich unbedenklichen Thermoplasten vorgesehen ist.

4. Verfahren zur Herstellung von Membranelementen nach Anspruch 1 bis 3, dadurch gekennzeichnet, daß die Reaktionsharze nach Zusatz von Initiatoren mit UV-Licht im Bereich der Wellenlängen von 250 bis 400 nm gehärtet werden.

5. Verfahren nach Anspruch 4, dadurch gekennzeichnet, daß die Härtung mit Licht im Bereich der Wellenlängen von 320 bis 350 nm durchgeführt wird.

6. Verfahren nach Anspruch 4 oder 5, dadurch gekennzeichnet, daß das Reaktionsharz in einer Schichtdicke von 0,5 bis 1,5 mm aufgetragen wird.

## Claims

1. Membrane element for reverse osmosis in an enclosing pressure-resistant housing, consisting of a tube for permeat (1) with a wound membrane (2), a radial winding with glass fibres (4) and a jacket (5) of reaction resins, characterized in that the reaction resins of the jacket are cross-linked by photopolymerisation.

2. Membrane element as claimed in claim 1, characterized in that the reaction resins are unsaturated polyesters.

3. Membrane element as claimed in claims 1 or 2, characterized in that a tubular sheeting (3) made of GRAS thermoplastics according to the food laws is provided between the membrane (2) and the radial winding (4).

4. Method for producing membrane elements as claimed in claims 1 to 3, characterized in that the reaction resins are cured after addition of initiators by ultraviolet light of a wave length between 250 bis 400 nm.

5. A method as claimed in claim 4, characterized in that curing is accomplished with light of a wave-length between 320 bis 350 nm.

6. A method as claimed in claims 4 or 5, characterized in that the reaction resin is applied in a thickness of layer between 0.5 to 1.5 mm.

## Revendications

1. Élément de membrane pour l'osmose inverse dans un carter entourant et resistant à pression, consistant d'un tube de permeate (1) enveloppé par une membrane (2), un bobinage radial avec des fibres de verre (4) et une enveloppe (5) de résine de réaction, caractérisé en ce que les résines de réaction de l'enveloppe sont réticulées par la photopolymérisation.

2. Élément de membrane selon revendication 1, caractérisé en ce que les résines de réaction sont des polyesters insaturés .

3. Élément de membrane selon revendication 1 ou 2, caractérisé en ce qu'il est prévu d'utiliser une gaine soufflée (3) entre la membrane (2) et le bobinage radial (4) en matières thermoplastiques conformes au droit alimentaire.

4. Procédé de préparation des éléments de membrane selon une des revendications 1 à 3, caractérisé en ce que les résines de réaction sont durcies après l'addition des initiateurs avec de la lumière ultraviolette d'une longueur d'onde entre 250 et 400 nm.

5. Procédé selon revendication 4, caractérisé en ce que le durcissement est exécuté avec de la lumière ultraviolette d'une longueur d'onde entre 320 et 350 nm.

6. Procédé selon revendication 4 ou 5, caractérisé en ce que la résine réactive est appliquée d'une épaisseur de couche de 0.5 à 1.5 mm.
